# EUROPEAN PATENT APPLICATION

(11) **EP 4 060 802 A1**
(43) Date of publication of application: **21.09.2022**
(21) Application number: 22162545.2
(22) Date of filing: 16.03.2022
(51) Int. Cl.: H01M 50/507, H01M 50/593, H01M 50/209, H01M 50/293

(54) **BATTERY PACK**

(30) Priority: 16.03.2021 KR 20210034238
(71) Applicant: Samsung SDI Co., Ltd., Yongin-si, Gyeonggi-do 17084 (KR)
(72) Inventor: LIM, Dooyong, 17084 Yongin-si (KR); PARK, Gunyeob, 17084 Yongin-si (KR); PARK, Seongjoon, 17084 Yongin-si (KR)
(74) Representative: Marks & Clerk LLP

(57) **Abstract**

A battery pack includes at least one battery cell and a connection circuit part electrically connected to the at least one battery cell, and the connection circuit part includes a connection wiring arranged on the at least one battery cell and electrically connected to the at least one battery cell, a heat-blocking layer between the at least one battery cell and the connection wiring, a busbar arranged at at least any of a position above or below the heat-blocking layer and connected to the at least one battery cell, and thermal fusion layers pressed to face each other with the connection wiring, the heat-blocking layer, and the busbar together therebetween.

## Description

### BACKGROUND

### 1. Field

Aspects of one or more embodiments relate to a battery pack.

### 2. Description of the Related Art

Typically, unlike primary batteries that are unable to be charged, secondary batteries are capable of being charged and discharged. Secondary batteries are used as energy sources for mobile devices, electric vehicles, hybrid vehicles, electric bicycles, uninterruptible power supplies, and the like. Secondary batteries may be used in the form of a single battery or a module by connecting a plurality of cells into one unit, depending on the type of an external device to be applied.

### SUMMARY

According to an aspect of one or more embodiments, a battery pack having low weight and low volume compared to a same output and capacity is provided, which may enhance convenience in a manufacturing process, and facilitate manufacturing of light and thin battery packs through a modularized and compact connection circuit part.

Additional aspects will be set forth, in part, in the description which follows and, in part, will be apparent from the description, or may be learned by practice of the presented embodiments of the disclosure.

According to one or more embodiments, a battery pack includes at last one battery cell and a connection circuit part electrically connected to the at least one battery cell, wherein the connection circuit part includes a connection wiring arranged on the at least one battery cell and electrically connected to the at least one battery cell, a heat-blocking layer between the at least one battery cell and the connection wiring, a busbar arranged at at least any of a position above or below the heat-blocking layer and connected to the at least one battery cell, and thermal fusion layers pressed to face each other with the connection wiring, the heat-blocking layer, and the busbar together therebetween.

In one or more embodiments, the at least one battery cell may include a plurality of battery cells, and the connection circuit part may be arranged above the plurality of battery cells in a plate shape across the plurality of battery cells, may form a charge/discharge path of the plurality of battery cells by electrically connecting the plurality of battery cells to one another, and may be connected to the plurality of battery cells and configured to obtain status information from the plurality of battery cells.

In one or more embodiments, the busbar may form a charge/discharge path of the plurality of battery cells by electrically connecting the plurality of battery cells to each other, and the connection wiring may be connected to the plurality of battery cells and configured to obtain status information from the plurality of battery cells.

In one or more embodiments, the battery pack may further include an input/output wiring connected to the busbar and including an end arranged at a position deviated from the thermal fusion layers, and a connector connected to the connection wiring and arranged at a position deviated from the thermal fusion layers.

In one or more embodiments, the busbar may connect in parallel battery cells of the plurality of battery cells belonging to a same parallel module to each other, and connect in series battery cells of the plurality of battery cells belonging to different parallel modules to each other.

In one or more embodiments, the parallel modules may each include a pair of battery cells neighboring each other in a first direction in which the battery cells are arranged.

In one or more embodiments, the busbar may include a connection part connecting different parallel modules to each other, and first and second branch parts protruding from end positions of the connection part and connected to each parallel module to be connected.

In one or more embodiments, the connection part may extend in the first direction in which the battery cells are arranged, and the first and second branch parts may protrude from the end positions of the connection part in a second direction in which first and second electrodes of each of the battery cells are arranged.

In one or more embodiments, the connection part may be arranged toward a central position of the battery cells in a second direction, and the first and second branch parts may be arranged toward edges where first and second electrodes of the battery cells are arranged in the second direction.

In one or more embodiments, the busbar may include a first busbar arranged above the heat-blocking layer, and a second busbar arranged below the heat-blocking layer.

In one or more embodiments, connection parts of the first and second busbars may be insulated from each other with the heat-blocking layer therebetween.

In one or more embodiments, the heat-blocking layer may be provided between the connection wiring and a vent part of the battery cells.

In one or more embodiments, the battery cells may each include first and second electrodes arranged in a second direction, and the vent part may be arranged at a central position between the first and second electrodes in the second direction.

In one or more embodiments, the connection wiring may extend in the second direction along a central position where the vent part is arranged.

In one or more embodiments, a width of the connection wiring in the second direction may be less than a width of the heat-blocking layer.

In one or more embodiments, a width of the connection wiring in the second direction may be less than a width between busbars arranged in the second direction.

In one or more embodiments, a length of the connection wiring in the first direction in which the battery cells are arranged may be less than a length of the heat-blocking layer.

In one or more embodiments, the connection wiring may extend from a front end toward a rear end in an arrangement of the battery cells in the first direction, to a position not overlapping a cross busbar arranged at the rear end of the arrangement of the battery cells.

In one or more embodiments, a connector connected to the connection wiring may be arranged outside the front end in the arrangement of the battery cells.

In one or more embodiments, the busbar may include a busbar and a crossbar, each being arranged in the first direction in which the battery cells are arranged, the busbar being in first and second rows arranged apart from each other in the second direction in which first and second electrodes of the battery cells are arranged, and the cross busbar may extend between busbar positions in the first and second rows.

In one or more embodiments, the battery pack may further include a pair of end plates arranged to face each other outside the front end and the rear end in an arrangement of the battery cells in the first direction, and a pair of side plates arranged to face each other in a second direction crossing the first direction with the arrangement of the battery cells therebetween between the pair of end plates.

In one or more embodiments, coupling holes of the connection circuit part and coupling protrusions of the end plates may form an insertion coupling therebetween.

In one or more embodiments, the coupling hole may be formed in the thermal fusion layers of the connection circuit part.

In one or more embodiments, the connection circuit part may have a length in the first direction and a width in the second direction crossing the first direction, and the coupling holes may be respectively located at each corner of the connection circuit part.

In one or more embodiments, a pressing piece configured to press the connection circuit part toward the arrangement of the battery cells may be arranged on the pair of side plates.

In one or more embodiments, the pressing piece may press both side ends of the arrangement of the battery cells in the second direction.

At least some of the above and other features of the invention are set out in the claims.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is an exploded perspective view of a battery pack according to an embodiment;
FIG. 2 is an exploded perspective view of a connection circuit part of FIG. 1;
FIG. 3 is a perspective view showing a connection between a battery cell of FIG. 1 and a busbar of FIG. 2;
FIG. 4 is a plan view of the battery pack viewed from above a first thermal fusion layer of FIG. 2;
FIG. 5 is a plan view of the battery pack viewed from above a heat-blocking layer of FIG. 2;
FIG. 6 is a plan view showing an arrangement of first and second busbars of FIG. 2;
FIG. 7 is an exploded perspective view showing the fixing of the position of the connection circuit part of FIG. 1; and
FIG. 8 is a perspective view showing an assembled state of a battery pack of FIG. 7.

### DETAILED DESCRIPTION

Reference will now be made in further detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

As used herein, the singular forms "a," "an," and "the" are intended to include the plural forms as well, unless the context clearly indicates otherwise.

It is to be understood that the terms "comprise," "include," and "have" used herein specify the presence of stated features or components, but do not preclude the presence or addition of one or more other features or components.

Sizes of components in the drawings may be exaggerated for convenience of description. In other words, since the sizes and thicknesses of components in the drawings may be arbitrarily illustrated for convenience of description, the following embodiments are not limited thereto.

It is to be understood that when a layer, region, or component is referred to as being "connected to" another layer, region, or component, it may be directly connected to the other layer, region, or component or may be indirectly connected to the other layer, region, or component with one or more intervening layers, regions, or components interposed therebetween. For example, it is to be understood that when a layer, region, or component is referred to as being "electrically connected to" another layer, region, or component, it may be directly electrically connected to the other layer, region, or component or may be indirectly electrically connected to the other layer, region, or component with one or more intervening layers, regions, or components interposed therebetween.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

Unless otherwise defined, all terms (including technical and scientific terms) used herein have the same meaning as commonly understood by one of ordinary skill in the art to which example embodiments of the inventive concept belong. It is to be further understood that terms, such as those defined in commonly-used dictionaries, should be interpreted as having a meaning that is consistent with their meaning in the context of the relevant art and will not be interpreted in an idealized or overly formal sense unless expressly so defined herein.

Herein, a battery pack according to one or more embodiments is described with reference to the accompanying drawings.

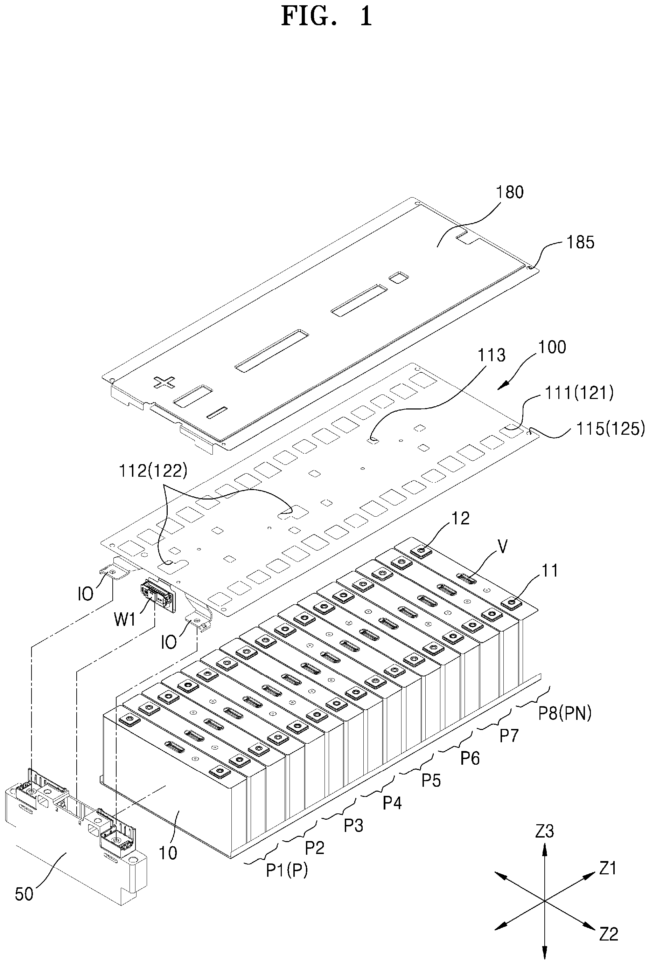

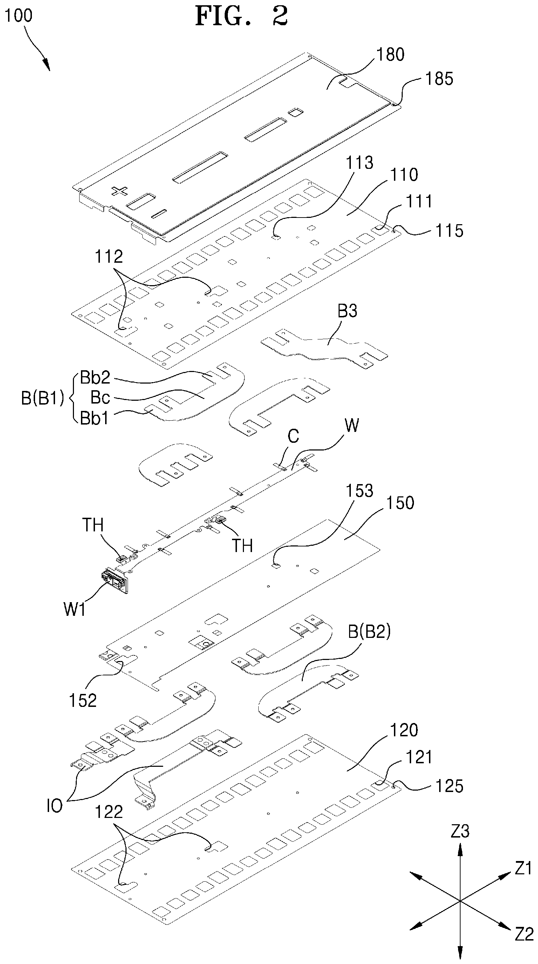

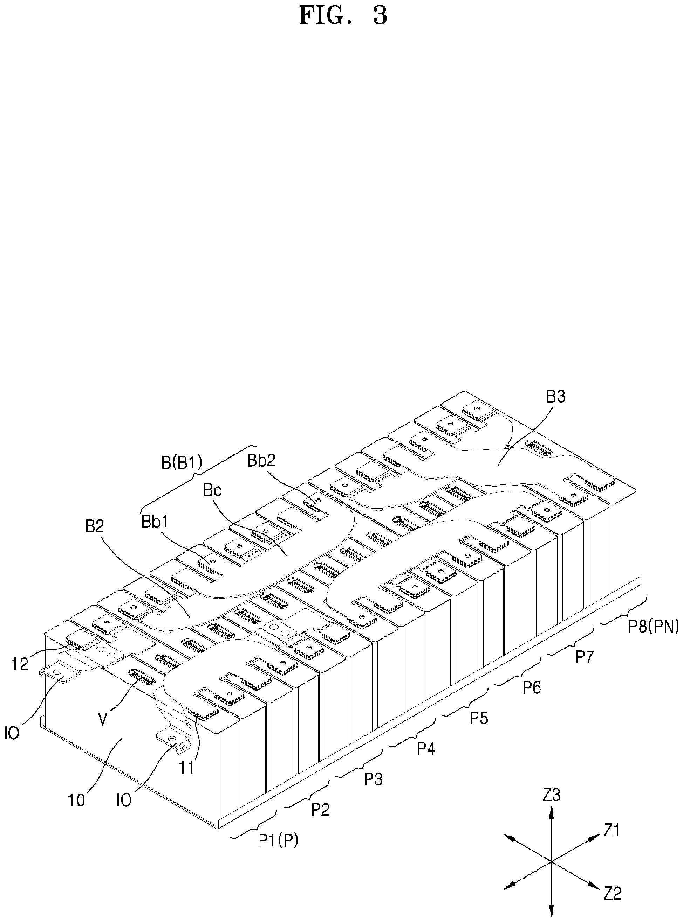

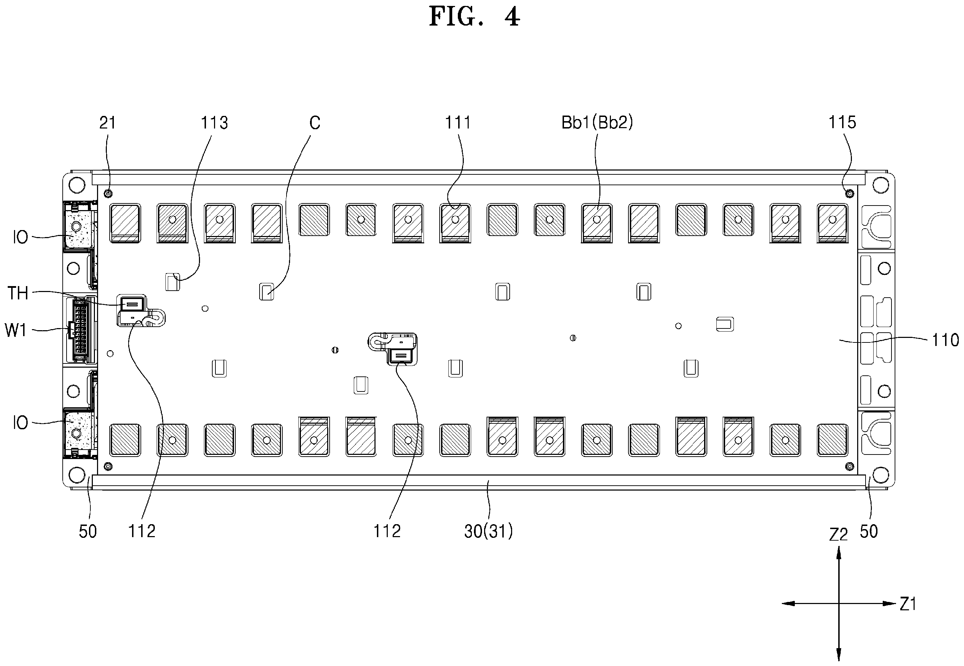

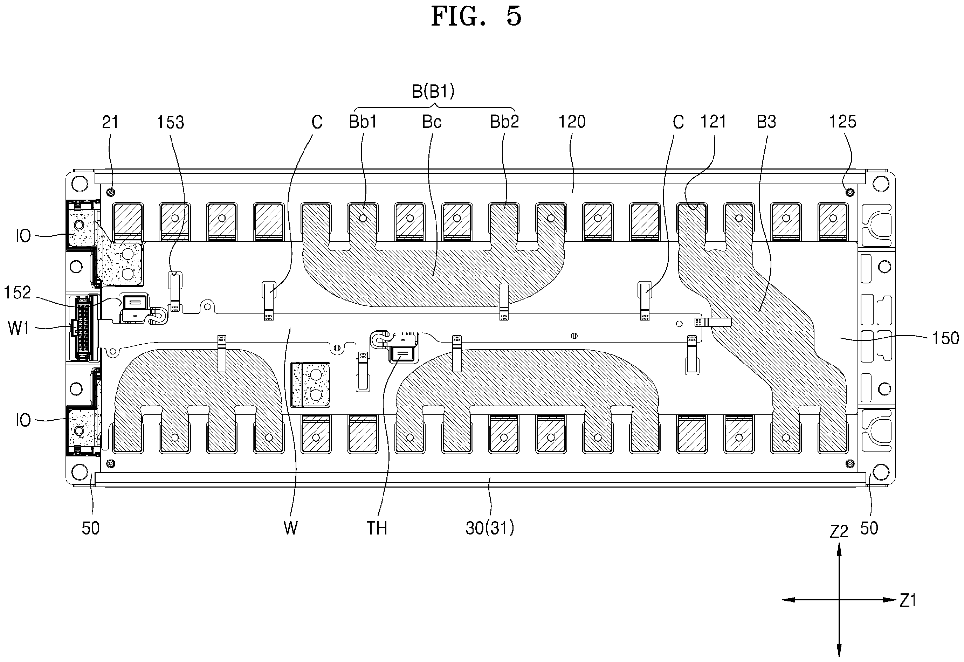

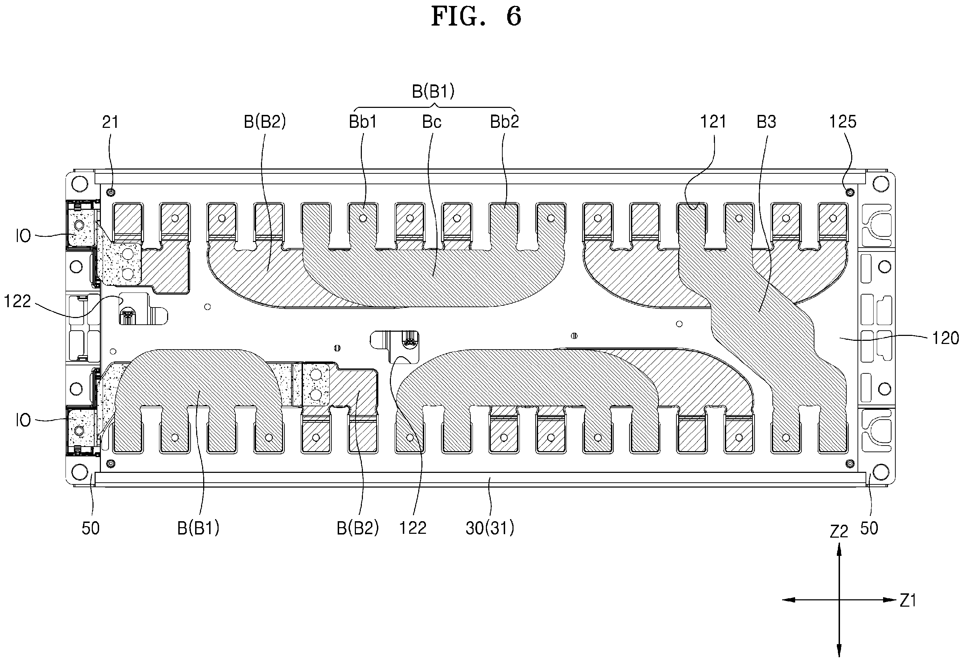

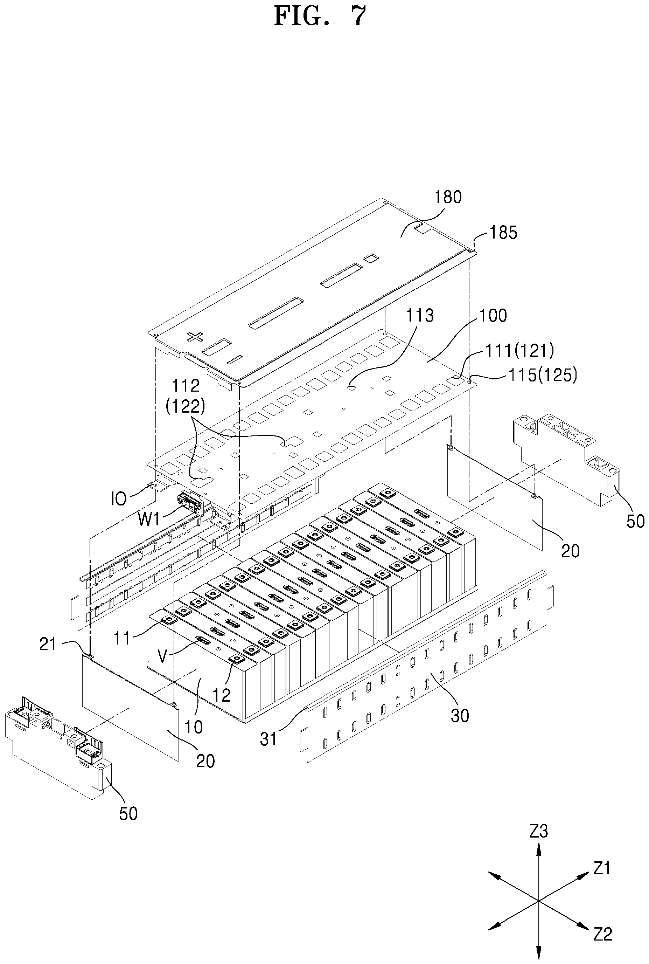

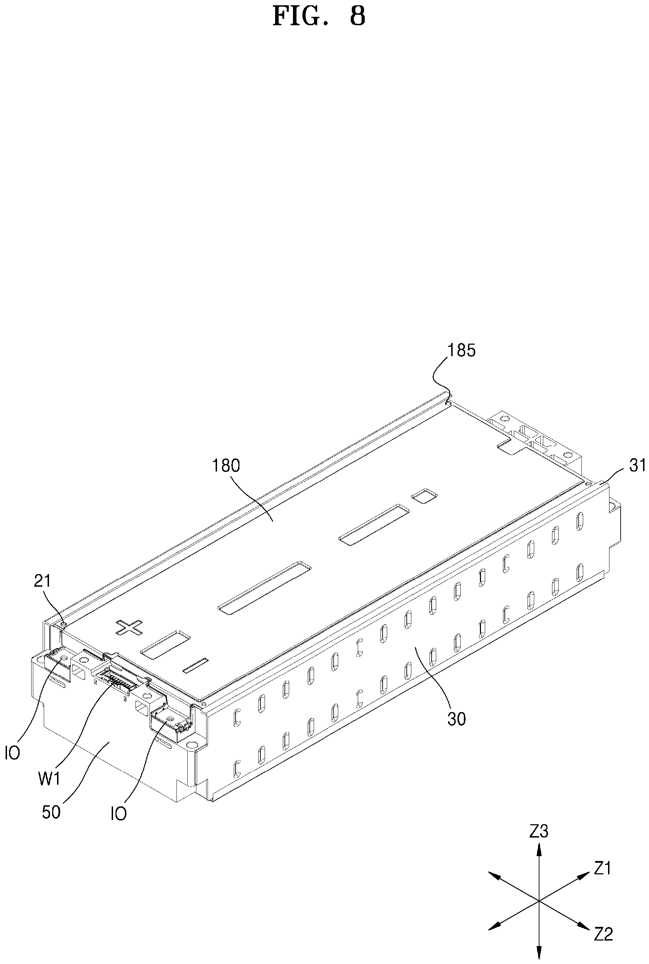

FIG. 1 is an exploded perspective view of a battery pack according to an embodiment; FIG. 2 is an exploded perspective view of a connection circuit part (or component) of FIG. 1; FIG. 3 is a perspective view showing a connection between a battery cell of FIG. 1 and a busbar of FIG. 2; FIG. 4 is a plan view of the battery pack viewed from above a first thermal fusion layer of FIG. 2; FIG. 5 is a plan view of the battery pack viewed from above a heat-blocking layer of FIG. 2; FIG. 6 is a plan view showing an arrangement of first and second busbars of FIG. 2; FIG. 7 is an exploded perspective view showing the fixing of the position of the connection circuit part of FIG. 1; and FIG. 8 is a perspective view showing an assembled state of a battery pack of FIG. 7.

Referring to the drawings, a battery pack according to an embodiment may include at least one battery cell 10 and a connection circuit part 100 electrically connected to the at least one battery cell 10.

The connection circuit part 100 may include a connection wiring W arranged above the at least one battery cell 10 and electrically connected to the at least one battery cell 10, a heat-blocking layer 150 provided between the at least one battery cell 10 and the connection wiring W, a busbar B arranged at at least any of a position above or below the heat-blocking layer 150 and electrically connected to the at least one battery cell 10, and first and second thermal fusion layers 110 and 120 pressed to face each other with the busbar B together with the connection wiring W and the heat-blocking layer 150 therebetween.

In an embodiment, the battery pack may include a plurality of battery cells 10 and the connection circuit part 100 may be electrically connected to the battery cells 10. The connection circuit part 100 may form a charge/discharge path of the battery cells 10, and an acquisition path to acquire status information, such as voltage information or temperature information, from the battery cells 10 may be formed. As described below, the connection circuit part 100 may be connected to a circuit board (not shown) provided at a side of the battery pack, may form a charge/discharge path of the battery cell 10 and the acquisition path of status information between the battery cells 10 and the circuit board, and may receive charge power from the circuit board or provide discharge power to the circuit board. Also, the connection circuit part 100 may provide the status information of the battery cells 10 to the circuit board. In various embodiments, the circuit board may be provided at a side of the battery pack or in a form of being connected to a plurality of battery packs.

In an embodiment, the circuit board may control a charge/discharge operation of the battery cells 10 by capturing an abnormal situation of any of the battery cells 10, such as overheating, overcharging, and over-discharging of the battery cell 10 based on the status information of the battery cell 10 collected from the battery cell 10, and blocking the charge/discharge path, and the like, and may form, for example, a battery management system (BMS) for controlling the charge/discharge operation of the battery cells 10.

The connection circuit part 100 may be formed above the battery cells 10 in a plate shape across the battery cells 10, may form the charge/discharge path of the battery cells 10 by electrically connecting the battery cells 10 to each other, and may acquire status information from the battery cells 10 by being connected to the battery cells 10. To this end, the connection circuit part 100 may include the busbar B that electrically connects the battery cells 10 to each other and forms the charge/discharge path of the battery cells 10, the connection wiring W that is connected to the battery cells 10 and acquires status information from the battery cells 10, the heat-blocking layer 150 that insulates and protects the busbar B and the connection wiring W, and the first and second thermal fusion layers 110 and 120 that combine the busbar B, the connection wiring W, and the heat-blocking layer 150 into the connection circuit part 100 . The respective components of the connection circuit part 100 are described below in further detail.

In an embodiment, the at least one battery cell 10 may include the battery cells 10 arranged in a first direction Z1. First and second electrodes 11 and 12 different from each other may be formed in each of the battery cells 10, and the first and second electrodes 11 and 12 different from each other may be apart from each other in a second direction Z2 different from the first direction Z1 corresponding to the arrangement direction of the battery cells 10. Throughout this specification, the first direction Z1 may correspond to the arrangement direction of the battery cells 10 in which the battery cells 10 are arranged and, as described below, correspond to an arrangement direction of a parallel module P including at least one or more battery cells 10 connected in parallel to each other. Further, the second direction Z2 may mean a direction crossing the first direction Z1, which corresponds to a widthwise direction throughout this specification. For example, in the width of the connection wiring W, the width of the heat-blocking layer 150, the width of the busbar B, and the width of the first and second thermal fusion layers 110 and 120, the width may mean a dimension measured in the second direction Z2. In an embodiment, the second direction Z2 may mean a direction crossing the first direction Z1, for example, a direction perpendicular to the first direction Z1. Throughout this specification, when the connection circuit part 100 is formed in a plate shape, it means that the connection circuit part 100 is arranged on a plane formed in the first and second directions Z1 and Z2. Further, the respective components forming the connection circuit part 100, that is, the connection wiring W, the heat-blocking layer 150, the busbar B, and the first and second thermal fusion layers 110 and 120, may be formed in a plate shape, and arranged on the plane formed in the first and second directions Z1 and Z2. As described below, although the connection wiring W, the heat-blocking layer 150, the busbar B, and the first and second thermal fusion layers 110 and 120 may be arranged at different levels in a third direction Z3 crossing the first and second directions Z1 and Z2, or formed to different thicknesses, the respective components forming the connection circuit part 100 may be connected to one another to form the connection circuit part 100 by the first and second thermal fusion layers 110 and 120, arranged on substantially the same level in the third direction Z3, and arranged on the plane formed in the first and second directions Z1 and Z2.

In an embodiment, the first and second electrodes 11 and 12 of the battery cell 10 may be formed on an upper surface of the battery cell 10 in the third direction Z3. The third direction Z3 may mean a direction crossing the first and second directions Z1 and Z2, and, in an embodiment, the third direction Z3 may correspond to a direction perpendicular to the first and second directions Z1 and Z2. In an embodiment, the first and second electrodes 11 and 12 may be formed on the upper surface of the battery cell 10, and the first and second electrodes 11 and 12 of the battery cell 10 may be connected to the connection circuit part 100 arranged on the upper surface of the battery cell 10. Throughout this specification, the third direction Z3 may correspond to a vertical direction such as up or down, and, in an embodiment, when the connection circuit part 100 is arranged above the battery cells 10, first and second busbars B1 and B2 are respectively arranged above and below the heat-blocking layer 150, or the first thermal fusion layer 110 is arranged above the first busbar B1 and the second thermal fusion layer 120 is arranged below the second busbar B2. The terms "above" and "below" may correspond to relative positions in the third direction Z3, meaning that, for example, the connection circuit part 100 is arranged above the battery cells 10 in the third direction Z3, the first and second busbars B1 and B2 are respectively arranged above and below the heat-blocking layer 150, and the first thermal fusion layer 110 is arranged above the first busbar B1 and the second thermal fusion layer 120 is arranged below the second busbar B2 in the third direction Z3.

The battery cells 10 may be electrically connected to each other via the busbar B. The busbar B may connect in parallel the battery cells 10 different from each other with the same poles, or in series the battery cells 10 different from each other with different poles. In an embodiment, the busbar B may connect in parallel the battery cells 10 that belong to the same parallel module P, and may connect in series the battery cells 10 that belong to different parallel modules P. For example, in an embodiment, the parallel module P may include the battery cells 10 different from each other arranged in the first direction Z1 neighboring each other, for example, a pair of the battery cells 10 arranged in the first direction Z1 neighboring each other. However, in various embodiments, the parallel module P may include at least one or more battery cells 10, for example, each battery cell 10 arranged in the first direction Z1 or three battery cells 10 neighboring one another in the first direction Z1. In other words, in various embodiments, the number of the battery cells 10 forming the parallel module P is not particularly limited, and one parallel module P may be formed for each single battery cell 10. However, in the following description, a case in which the parallel module P is formed for each pair of the battery cells 10 neighboring each other in the first direction Z1 and thus different pairs of the battery cells 10 sequentially in the first direction Z1 form each parallel module P is mainly described. In an embodiment, the battery pack may include first, second, ..., eighth parallel modules P1, P2, ..., P8 sequentially arranged in the first direction Z1, and the first parallel module P1 may form the parallel module P at the front end in the first direction Z1, and the eighth parallel module P8 may form the parallel module P at the rear end in the first direction Z1. In this connection, the eighth parallel module P8 may correspond to an n-th parallel module PN forming the parallel module P at the rear end in various embodiments.

The busbar B may connect in series the parallel modules P neighboring each other in the first direction Z1 to each other or the parallel modules P not neighboring each other in the first direction Z1 to each other. In an embodiment, the busbar B may connect in series a plurality of parallel modules P arranged in the first direction Z1, and the parallel modules P neighboring each other in the first direction Z1 may be directly connected in series or the parallel modules P not neighboring each other in the first direction Z1 may be directly connected in series, via the busbar B, in the order of electrical connection to each other. Throughout this specification, the serial connection of the parallel modules P not neighboring each other in the first direction Z1 may mean that the parallel modules P neighboring each other in the first direction Z1 are not directly connected to each other, but are connected in series to each other with another parallel module P therebetween.

In other words, the busbar B connecting in series the parallel module P neighboring each other to each other may mean that the parallel modules P neighboring each other in the first direction Z1 are directly connected in series to each other, and the busbar B connecting in series the parallel modules P not neighboring each other to each other may mean that the parallel modules P neighboring each other in the first direction Z1 are not directly connected in series, but the parallel modules P not neighboring each other in the first direction Z1 are directly connected in series to each other.

In an embodiment, the busbar B may connect in series the first and second parallel modules P1 and P2 that neighbor each other and form the front end in the first direction Z1, to each other, and the seventh and eighth parallel modules P7 and P8 that neighbor each other and form the rear end in the first direction Z1, to each other, and in the connection from the second parallel module P2 to the eighth parallel module P8 other than the above connections, may connect in series the parallel modules P not neighboring each other to each other. For example, the battery pack may include the first, second, ..., eighth parallel modules (the n-th parallel module PN) P1, P2, ..., P8 that are arranged in order in the first direction Z1. The busbar B may connect in series the parallel modules P different from each other and arranged in the first direction Z1, in the order of the first parallel module P1, the second parallel module P2, the fourth parallel module P4, the sixth parallel module P6, the eighth parallel module P8, the seventh parallel module P7, the fifth parallel module P5, and the third parallel module P3. In an embodiment, the battery pack may include the total of eight parallel modules P, and the first parallel module P1 may correspond to the parallel module P at the front end in the first direction Z1, and the eighth parallel module P8 may correspond to the parallel module P at the rear end in the first direction Z1, that is, the n-th parallel module PN, in various embodiments. According to an embodiment, the first and second parallel modules P1 and P2 neighboring each other at the front end in the first direction Z1 are connected in series to each other, and the seventh and eighth parallel modules P7 and P8 neighboring each other at the rear end are connected in series to each other. However, in the connection from the second parallel module P2 to the eighth parallel module P8 other than the above connections, the parallel modules P not neighboring each other may be connected in series to each other.

In an embodiment, in the order of electrical connection formed by the busbar B, from the second parallel module P2 to the eighth parallel module P8, the parallel modules P may be connected in series in an alternating order in the first direction Z1, skipping one by one. For example, the even-numbered parallel modules P are connected in series to each other, that is, in the order of the second, fourth, sixth, and eighth parallel modules P2, P4, P6, and P8, and in a reverse order from the last eighth parallel module P8 in the first direction Z1, the eighth parallel module P8 and the seventh parallel module P7 neighboring each other are connected in series to each other, and then the parallel modules P may be alternately connected in series from the seventh parallel module P7, skipping one by one. For example, the odd-numbered parallel modules P are connected in series to each other, that is, in the order of the seventh, fifth, and third parallel modules P7, P5, and P3. According to an embodiment, while in a physical arrangement order, the first, second, ..., eighth parallel modules P1, P2, ..., P8 are sequentially arranged in the first direction Z1 from the first parallel module P1 at the front end to the eighth parallel module P8 at the rear end, in the electrical connection order, the parallel modules P may be connected in series from the first parallel module P1 at the front end to the third parallel module P3 at the rear end. As an input/output wiring IO is connected to each of the first parallel module P1 at the front end and the third parallel module P3 at the rear end, the charge/discharge path of the battery cells 10 forming the battery pack may be connected to the circuit board via the input/output wiring IO. As described below, in an embodiment, the input/output wiring IO may include a first end placed on an end block 50 and a second end connected to the busbar B connected to each of the first and third parallel modules P1 and P3. The first end of the input/output wiring IO may be placed on the end block 50 outside of the connection circuit part 100, that is, the first and second thermal fusion layers 110 and 120 forming an outer surface of the connection circuit part 100, and the first end of the input/output wiring IO placed on the end block 50 may be electrically connected to another battery pack.

In an embodiment, the busbar B may include first and second branch parts Bb1 and Bb2 connected to the battery cells 10 belonging to the same parallel module P and a connection part Bc extending in the first direction Z1 in which the parallel modules P are arranged, to connect the parallel modules P different from each other to each other. For example, the busbar B may electrically connect the two parallel modules P different from each other in the first direction Z1. In this state, the first and second branch parts Bb1 and Bb2 may be connected to the parallel modules P to be connected, and the connection part Bc may extend between the first and second branch parts Bb1 and Bb2. The first and second branch parts Bb1 and Bb2 may connect the battery cells 10 belonging to the same parallel module P with the same pole, forming one parallel module P, and the first and second branch parts Bb1 and Bb2 may connect the battery cells 10 belonging to each of the parallel modules P with the same pole. The connection part Bc may connect in series the parallel modules P different from each other by connecting the parallel modules P different from each other with different poles. In an embodiment, the first and second branch parts Bb1 and Bb2 may each be formed by twos corresponding to a pair of the battery cells 10 neighboring each other forming the parallel module P, and the first and second branch parts Bb1 and Bb2 may respectively include two first branch parts Bb1 and two second branch parts Bb2. In an embodiment, the connection part Bc may extend approximately in the first direction Z1 corresponding to the arrangement direction of the parallel module P or the arrangement direction of the battery cells 10. The first and second branch parts Bb1 and Bb2 may protrude from the connection part Bc extending in the first direction Z1 in the second direction Z2 crossing the first direction Z1, and may include the first and second branch parts Bb1 and Bb2 protruding from both ends of the connection part Bc. In an embodiment, the connection part Bc may be arranged toward a central position in the second direction Z2 in which the first and second electrodes 11 and 12 of the battery cell 10 are arranged, and the first and second branch parts Bb1 and Bb2 may protrude from both ends of the connection part Bc in the second direction Z2 to be arranged toward an edge position where the first and second electrodes 11 and 12 are arranged. In other words, in an embodiment, as the connection part Bc of the busbar B is arranged adjacent to the central position in the second direction Z2, the busbar B may be arranged such that the first and second branch parts Bb1 and Bb2 of the busbar B are adjacent to an edge position in the second direction Z2. As described below, the busbar B may include the first busbar B1 arranged above the heat-blocking layer 150 and the second busbar B2 below the heat-blocking layer 150, with respect to the heat-blocking layer 150. In this state, each of the first and second busbars B1 and B2 may include the connection part Bc and the first and second branch parts Bb1 and Bb2 protruding from both ends of the connection part Bc.

In an embodiment, as the busbar B extends approximately in the first direction Z1 or includes a plurality of busbars B arranged approximately in the first direction Z1, the busbar B may connect a plurality of parallel modules P arranged in the first direction Z1. In this state, among the battery cells 10 different from each other arranged in the first direction Z1, the battery cells 10 belonging to the same parallel module P may be connected in parallel with the same pole, whereas the battery cells 10 belonging to the parallel modules P different from each other may be connected in series with different poles. As such, as the busbar B extends approximately in the first direction Z1 or includes a plurality of busbars B arranged approximately in the first direction Z1, a configuration of connecting in parallel the battery cells 10 different from each other with the same pole or with different poles may be determined depending on the orientation of the battery cells 10.

In an embodiment, the battery cell 10 may include the first and second electrodes 11 and 12 of different poles in the second direction Z2. In this state, when the battery cells 10 neighboring each other in the first direction Z1 are arranged in the same orientation, that is, the first and second electrodes 11 and 12 are aligned at the same position in the second direction Z2, the busbar B extending in the first direction Z1 may connect the battery cells 10 with the same pole and the battery cells 10 may form the same module P. Unlike the above, when the battery cells 10 neighboring each other in the first direction Z1 are arranged in opposite orientations in the second direction Z2, that is, the first and second electrodes 11 and 12 are arranged at opposite positions in the second direction Z2, the busbar B extending in the first direction Z1 may connect the battery cells 10 with different poles and the battery cells 10 may form the parallel modules P different from each other.

In an embodiment, a pair of the battery cells 10 neighboring each other in the first direction Z1 may be arranged in the same orientation to form the same parallel module P, and the parallel modules P different from each other and connected in series to each other in the first direction Z1 may be arranged in the opposite orientations. In an embodiment, as the first and second parallel modules P1 and P2 forming the front end in the first direction Z1 are connected in series to each other, the first and second parallel modules P1 and P2 are arranged in the opposite orientations. In other words, in the first direction Z1, the first and second parallel modules P1 and P2 may be arranged such that two battery cells 10 are arranged, as one unit, in the opposite orientations, and from the second parallel module P2 to the eighth parallel module P8, as the parallel modules P not neighboring each other are connected in series, from the second parallel module P2 to the eighth parallel module P8, four battery cells 10 may be arranged, as one unit, in the opposite orientations. As described below, as the seventh and eighth parallel modules P7 and P8 forming the rear end in the first direction Z1 are connected in series to each other, and are connected in series via a cross busbar B3 extending not in the first direction Z1 but approximately in the second direction Z2 crossing the first direction Z1, the seventh and eighth parallel modules P7 and P8 may be arranged in the same orientation. Accordingly, from the second parallel module P2 to the eighth parallel module P8, four battery cells 10 may be arranged, as one unit, in the opposite orientations. For reference, the cross busbar B3 may correspond to the busbar B that electrically connects the parallel modules P different from each other. Throughout this specification, the busbar B extending approximately in the first direction Z1 may mean that, among the busbars B, most busbars B except the cross busbar B3 extend in the first direction Z1.

The busbar B may be arranged in two rows along the positions where the first and second electrodes 11 and 12 are arranged while extending approximately in the first direction Z1 in which the battery cells 10 or the parallel modules P are arranged. In this state, the busbars B in first and second rows that are different from each other may be arranged in the opposite orientation to turn against each other, and the busbars B belonging to the same row may be arranged in the same orientation. The orientation of the busbars B may mean that, when the busbars B belonging to different rows are arranged toward the same central position in the second direction Z2, the busbars B may be said to be arranged in the opposite orientations to turn against each other, and when the busbars B belonging to the same row are arranged toward the same central position in the second direction Z2, the busbars B may be said to be arranged in the same orientation. Throughout this specification, the central position in the second direction Z2 may mean the central position of the battery cell 10 where a vent part V is formed. When the connection wiring W is arranged at the central position in the second direction Z2, the heat-blocking layer 150 is arranged around the central position in the second direction Z2, or the connection part Bc of the busbar B is arranged toward the central position in the second direction Z2, these configurations may mean an arrangement at the central position where the vent part V of the battery cell 10 is formed in the second direction Z2, or an arrangement around the central position or toward the central position.

In an embodiment, as the connection part Bc of the busbar B is arranged toward the central position in the second direction Z2, the width of the busbar B in the second direction Z2 may be increased, and even when the width of the busbar B in the second direction Z2 is increased, the range of the battery cell 10 may not be deviated. In other words, in an embodiment, by arranging the connection part Bc of the busbar B toward the central position in the second direction Z2, the width of the busbar B is increased such that a charge/discharge path of relatively low resistance may be formed, and as the width of the busbar B in the second direction Z2 is not deviated from the battery cell 10, no burden may be given to the size of the entire battery pack.

The busbar B may include the connection part Bc arranged at the central position where the heat-blocking layer 150 is formed, and the first and second branch parts Bb1 and Bb2 extending from the connection part Bc to a position deviated, or spaced from, from the heat-blocking layer 150 in the second direction Z2. As described below, in an embodiment, in the orientation of the busbar B, the connection part Bc of the busbar B may be arranged at the central position in the second direction Z2, and, accordingly, the connection part Bc of the first and second busbars B1 and B2 respectively arranged above and below the heat-blocking layer 150 may be insulated from each other through the heat-blocking layer 150 arranged at the central position. Further, the first and second branch parts Bb1 and Bb2 of the first and second busbars B1 and B2 respectively arranged above and below the heat-blocking layer 150 extend from the connection part Bc in the second direction Z2 and extending from the central position where the heat-blocking layer 150 is arranged to a position deviated from the central position, and may be connected to the first and second electrodes 11 and 12 of the battery cell 10 at a position deviated from the heat-blocking layer 150. For example, the first busbar B1 arranged above the heat-blocking layer 150 may be connected to the battery cell 10 below the heat-blocking layer 150, that is, the first and second electrodes 11 and 12 of the battery cell 10, through the first and second branch parts Bb1 and Bb2 extending to the position deviated from the heat-blocking layer 150.

In an embodiment, the connection part Bc of the busbar B being arranged at the central position in the second direction Z2 may mean that all of the connection parts Bc of the busbar B are arranged at the central position in the second direction Z2. In other words, the connection part Bc of the busbar B in the first and second rows corresponding to the positions where the first and second electrodes 11 and 12 of the battery cell 10 are formed may be all arranged at the central position in the second direction Z2. In this state, the busbars B belonging to the first and second rows different from each other may not overlap each other even when arranged at the central position in the second direction Z2. However, as the busbars B belonging to the same row of the first and second rows may overlap each other, the busbars B overlapping each other among the busbars B belonging to the same row of the first and second rows may be arranged on levels different from each other with the heat-blocking layer 150 therebetween. For example, among the busbars B belonging to the same row of the first and second rows, the busbars B neighboring each other in the first direction Z1 may be arranged on levels different from each other with the heat-blocking layer 150 therebetween. The busbars B different from each other being arranged on the levels different from each other with the heat-blocking layer 150 therebetween may mean that, as the busbars B different from each other are arranged above and below the heat-blocking layer 150 provided therebetween, the busbars B may be insulated from each other with the heat-blocking layer 150 therebetween.

In an embodiment, in the busbars B belonging to the same row of the first and second rows, some of the busbars B overlapping each other may be arranged above the heat-blocking layer 150, and the other of the busbars B may be arranged below the heat-blocking layer 150. In other words, the busbar B may include the first busbar B1 arranged above the heat-blocking layer 150 and the second busbar B2 arranged below the heat-blocking layer 150. In further detail, whether which busbar B is to be formed as the first busbar B1 arranged above the heat-blocking layer 150 or as the second busbar B2 arranged below the heat-blocking layer 150 may be determined according to a design, and, in various embodiments, the positions of the first and second busbars B1 and B2 may be changed variously within limits that some of the busbars B overlapping each other in the third direction Z3 are formed as the first busbars B1 above the heat-blocking layer 150 and the other of the busbars B are formed as the second busbars B2 below the heat-blocking layer 150.

In an embodiment, as the busbars B overlapping each other in the third direction Z3, among the busbar B connecting the second and fourth parallel modules P2 and P4 and the busbars B connecting the third and fifth parallel modules P3 and P5, the busbar B connecting the second and fourth parallel modules P2 and P4 may be formed as the second busbar B2, and the busbar B connecting the third and fifth parallel modules P3 and P5 may be formed as the first busbar B1.

Similarly, as the busbars B overlapping each other in the third direction Z3, among the busbar B connecting the fourth and sixth parallel modules P4 and P6 and the busbar B connecting the fifth and seventh parallel modules P5 and P7, the busbar B connecting the fourth and sixth parallel modules P4 and P6 may be formed as the first busbar B1, and the busbar B connecting the fifth and seventh parallel modules P5 and P7 may be formed as the second busbar B2.

Among the busbars B not overlapping other busbars B in the third direction Z3, in the order of electrical connection, the busbar B connected to the first parallel module P1 at the front end and the third parallel module P3 at the rear end may be formed as the second busbar B2, and the busbar B connecting the first and second parallel modules P1 and P2 may be formed as the first busbar B1. In the order of electrical connection, the input/output wiring IO may be connected to the first parallel module P1 at the front end and the third parallel module P3 at the rear end. In an embodiment, the input/output wiring IO may be arranged below the heat-blocking layer 150 and connected to the second busbar B2 arranged below the heat-blocking layer 150. However, in an embodiment, the input/output wiring IO connected to the first parallel module P1 that is relatively close to the end block 50 may be arranged in a hole in the heat-blocking layer 150. In this state, the input/output wiring IO connected to the first parallel module P1 may be arranged on the same level as the heat-blocking layer 150. The input/output wiring IO connected to the first and third parallel modules P1 and P3, in a state of being connected to each second busbar B2 (the second busbar B2 connected to the first and third parallel modules P1 and P3), may be arranged in the hole of the heat-blocking layer 150 or below the heat-blocking layer 150. The busbars B in the first and second rows arranged apart from each other in the second direction Z2 may face each other with the connection wiring W therebetween. In further detail, the connection parts Bc of the busbars B in the first and second rows different from each other may be arranged to face each other with the connection wiring W therebetween. For example, the width of the connection wiring W in the second direction Z2 may be less than the width between the connection parts Bc of the busbars B in the first and second rows.

In an embodiment, the busbar B may extend approximately in the first direction Z1 in which the battery cell 10 or the parallel module P extends, but the cross busbar B3 connected to the eighth parallel module P8 arranged at the rear end in the first direction Z1 may extend approximately in the second direction Z2 and may connect in series the seventh and eighth parallel modules P7 and P8 arranged in the same orientation to each other. In further detail, the cross busbar B3 connected to the eighth parallel module P8 arranged at the rear end in the first direction Z1 is a configuration to change an electrical connection direction from a direction from the front end to the rear end to a direction from at the rear end to the front end, and may correspond to the busbar B, for example, in terms of connecting the seventh parallel module P7 and the eighth parallel module P8 different from each other. In this state, the cross busbar B3 connecting the seventh parallel module P7 and the eighth parallel module P8 and the busbar B connecting the sixth parallel module P6 and the eighth parallel module P8 may respectively extend in the second direction Z2 and in the first direction Z1 and overlap each other by crossing each other. The cross busbar B3 connecting the seventh parallel module P7 and the eighth parallel module P8 may be formed as the first busbar B1, and the busbar B connecting the sixth parallel module P6 and the eighth parallel module P8 may be formed as the second busbar B2.

In an embodiment, the busbar B may include the cross busbar B3 and the busbars B in the first and second rows arranged apart from each other in the second direction Z2 in which the first and second electrodes 11 and 12 of the battery cell 10 are arranged. In this state, the busbars B in the first and second rows extending in the first direction Z1 may include a plurality of busbars B arranged in the first direction Z1. For example, the busbar B in the first row is formed at a position in the first row, not extending to a position in the second row. Similarly, the busbar B in the second row is formed at a position in the second row, not extending to a position in the first row. Unlike the busbars B in the first and second rows, the cross busbar B3 may extend between the busbars B in the first and second rows.

The connection wiring W may be arranged with the first busbar B1 above the heat-blocking layer 150. The connection wiring W connects between the battery cells 10, or the busbar B connected to the battery cells 10, and the circuit board, and the status information of the battery cells 10 may be collected into the circuit board through the connection wiring W. For example, the connection wiring W may extend in the first direction Z1, may be placed on the end block 50 arranged outside the front end in the arrangement of the battery cells 10 in the first direction Z1, and may extend from the end block 50 to a position that does not overlap the cross busbar B3 arranged at the rear end. For example, a connector W1 may be formed at an end of the connection wiring W, and the connector W1 may be placed on the end block 50 at a position deviated from the connection circuit part 100 or at a position deviated from the first and second thermal fusion layers 110 and 120 forming the outer surface of the connection circuit part 100. Through the connector W1 placed on the end block 50, the connection wiring W may be connected to the circuit board provided at a side of the battery pack or the circuit board in the form of connecting a plurality of battery packs.

The connection wiring W may mediate transfer of status information between the busbar B connected to the battery cells 10 and the circuit board, and may provide status information, such as voltage information or temperature information of the battery cells 10, to the circuit board through the busbar B connected to the battery cell 10. The connection wiring W may be formed at a position not overlapping the busbar B in the third direction Z3, and, for example, may extend in the first direction Z1 along the arrangement of the battery cells 10 from the front end toward the rear end, and may be formed at a position not overlapping the cross busbar B3 arranged at the rear end in the arrangement of the battery cells 10. In an embodiment, not to overlap in the second direction Z2 the busbars B in first and second rows that are different from each other, the width of the connection wiring W may be less than the width between the busbars B in the first and second rows that are different from each other. In other words, the formation position and size of the connection wiring W may be restricted by the busbar B, and the length of the connection wiring W in the first direction Z1 and the width of the connection wiring W in the second direction Z2 may be restricted by the busbar B.

In an embodiment, the width of the connection wiring W may be less than the width of the heat-blocking layer 150 where the connection wiring W is formed. As described below, as the connection wiring W may be protected through the heat-blocking layer 150, the width of the connection wiring W may be less than the width of the heat-blocking layer 150, and a width including a connection part C connected to the connection wiring W may also be less than the width of the heat-blocking layer 150, and, thus, both the connection wiring W and the connection part C may be protected by the heat-blocking layer 150. In an embodiment, there is a relationship that the width of the heat-blocking layer 150 in the second direction Z2 is greater than the width between the busbars B in the first and second rows different from each other, which is greater than the width of the connection wiring W.

In an embodiment, the connection wiring W may extend approximately in the first direction Z1 in which the battery cells 10 are arranged, and may be connected to the busbar B through the connection part C that extends in the second direction Z2 toward the busbars B from the connection wiring W extending in the first direction Z1.

In further detail, the connection part C extending from the connection wiring W arranged above the heat-blocking layer 150 may be arranged above the heat-blocking layer 150, and the connection part C arranged above the heat-blocking layer 150 may be connected to the first busbar B1 arranged above the heat-blocking layer 150, and to the second busbar B2 arranged below the heat-blocking layer 150 through a connection hole 153 penetrating the heat-blocking layer 150. The connection part C may extend from the connection wiring W extending in the first direction Z1 toward the busbars B at both sides in the second direction Z2, and the connection part C may be connected to the cross busbar B3 by extending in the first direction Z1. In an embodiment, the connection part C may extend from the connection wiring W formed at the central position in the second direction Z2, and may be connected to the connection part Bc of the busbar B arranged at the central position. As the connection part C is connected to the connection part Bc of the busbar B arranged at the central position, a connection distance between the connection wiring W and the busbar B may be reduced.

In an embodiment, the connection wiring W may include a thermistor TH, and temperature information of the battery cell 10 may be provided to the circuit board through the thermistor TH thermally connected to the battery cell 10. For example, in an embodiment, the connection wiring W may obtain the voltage information of the battery cell 10 through the connection part C connected to the busbar B, and may obtain the temperature information of the battery cell 10 through the thermistor TH thermally connected to the battery cell 10. Throughout this specification, the thermal connection may mean that the thermistor TH is in contact with the battery cell 10 or is arranged at a position adjacent to at least the battery cell 10. The thermistor TH of the connection wiring W may be thermally connected to the battery cell 10, for example, to be in contact with the battery cell 10, through an exposure hole 152 formed in the heat-blocking layer 150 and exposure holes 112 and 122 formed in the first and second thermal fusion layers 110 and 120.

The connection wiring W may be arranged at the central position in the second direction Z2, that is, the central position of the battery cell 10. In an embodiment, the vent part V may be formed in the central position of the battery cell 10, and the vent part V may be formed at the central position between the first and second electrodes 11 and 12 formed at both sides in the second direction Z2. The connection wiring W may extend along the central position where the vent parts V of the battery cells 10 are connected in the first direction Z1. The vent part V is a component to remove a pressure accumulated in the battery cell 10 in an abnormal situation, such as overheating, explosion, and ignition of the battery cell 10, and a gas of a high temperature and a high pressure may be discharged through the vent part V. In this state, to protect the connection wiring W from the high-temperature and high-pressure gas discharged through the vent part V, the connection wiring W may be arranged above the heat-blocking layer 150, and the heat-blocking layer 150 protects the connection wiring W from the high-temperature and high-pressure gas discharged through the vent part V, such that the abnormal situation of the battery cell 10 may be captured, and by taking a protection measure to stop the charge/discharge of the battery cell 10, and the like, damage according to the abnormal situation of the battery cell 10 may be reduced. In other words, even after the high-temperature and high-pressure gas is discharged from the vent part V, the connection wiring W performs a normal function, and may continuously monitor the abnormal situation of the battery cell 10 or take a protection measure according to the abnormal situation of the battery cell 10.

In an embodiment, the heat-blocking layer 150 may be provided between the vent part V of the battery cell 10 and the connection wiring W in the third direction Z3 and may protect the connection wiring W from the high-temperature and high-pressure gas discharged through the vent part V. For example, the connection wiring W may be formed in an inner area of the heat-blocking layer 150 on the plane formed by the first and second directions Z1 and Z2, and may have a length less than a length of the heat-blocking layer 150 in the first direction Z1 and a width less than a width of the heat-blocking layer 150 in the second direction Z2. The connection wiring W may be formed at a central position in the second direction Z2, and may be aligned at the central position of the heat-blocking layer 150. In an embodiment, the vent part V of the battery cell 10, the heat-blocking layer 150, and the connection wiring W may all extend in the first direction Z1, and center lines of the vent part V of the battery cell 10, the heat-blocking layer 150, and the connection wiring W in the second direction Z2 may be aligned with one another.

The heat-blocking layer 150 may protect the connection wiring W and, as described above, may insulate the first and second busbars B1 and B2, for example, the connection part Bc of the first and second busbars B1 and B2, from each other. In an embodiment, the heat-blocking layer 150 may have shape stability at a high melting point and a high temperature to protect the connection wiring W from the high-temperature and high-pressure gas discharged from the vent part V, and also have electrical insulation to insulate the first and second busbars B1 and B2 from each other. In an embodiment, the heat-blocking layer 150 may include a material having heat blocking performance satisfying all of conditions 1) to 3) below.
1) A time for combustion and formation of sparks after applying flame five times is less than or equal to 60 seconds.
2) Falling sparks will not ignite cotton underneath.
3) A hole of 3 mm or less is generated in the specimen by flame and combustion.

The heat-blocking layer 150 may be formed around the central position in the second direction Z2, at a position not blocking the first and second electrodes 11 and 12 of the battery cell 10 formed at both sides in the second direction Z2. In an embodiment, the heat-blocking layer 150 insulates the connection part Bc of the first and second busbars B1 and B2 overlapping each other at the central position in the second direction Z2 and, further, protects the connection wiring W arranged at the central position in the second direction Z2. Accordingly, the heat-blocking layer 150 may extend to an edge position in the second direction Z2 not to block the first and second electrodes 11 and 12 of the battery cell 10, and may be formed at the central position so as not to block a connection between the first and second electrodes 11 and 12 of the battery cell 10 and the busbar B (the first and second branch parts Bb1 and Bb2 of the busbar B).

The connection wiring W and the first busbar B1 arranged above the heat-blocking layer 150, and the second busbar B2 arranged below the heat-blocking layer 150 may form the connection circuit part 100 in a panel shape by being combined to each other through the first and second thermal fusion layers 110 and 120. In an embodiment, the connection circuit part 100 incorporating the connection wiring W, the busbar B, and the input/output wiring IO connected to the busbar B in one component form with respect to the heat-blocking layer 150 may be formed. In an embodiment, as the connection circuit part 100 for forming the charge/discharge path and the acquisition path of status information about the battery cells 10 between the battery cells 10 and the circuit board is modularized in one component form in a plate shape, convenience in a manufacturing process of a battery pack may be enhanced, it is possible to achieve light weight and compactness of the battery pack through the connection circuit part 100 that is miniaturized, and a battery pack having low weight and low volume compared to the same output and capacity may be provided.

The connection circuit part 100 may form a charge/discharge path from the battery cells 10 through the busbar B forming the connection circuit part 100 and the input/output wiring IO connected to the busbar B, and also the acquisition path of status information from the battery cells 10 may be formed through the connection wiring W forming the connection circuit part 100. As such, the connection circuit part 100 may form a path of large current corresponding to the charge/discharge path of the battery cell 10 and a path of small current corresponding to the acquisition path of the status information of the battery cell 10. In an embodiment, the connection circuit part 100 may be connected to the circuit board through a portion connected to the end block 50 formed outside the front end in the arrangement of the battery cells 10 in the first direction Z1, that is, the first end of the input/output wiring IO and the connector W1 of the connection wiring W, may receive charge power through the circuit board or provide discharge power to the circuit board and, further, may provide the status information of the battery cell 10 to the circuit board. In an embodiment, the busbar B forming a path of the large current corresponding to the charge/discharge path of the battery cell 10, and the connection wiring W forming a path of the small current corresponding to the acquisition path of the status information of the battery cell 10, are apart from each other. As described below, the first and second thermal fusion layers 110 and 120 for combining the busbar B and the connection wiring W to each other fills a space between the busbar B and the connection wiring W, thereby firmly securing a distance therebetween. As described below, the first and second thermal fusion layers 110 and 120 may fill the space between the busbar B and the connection wiring W to cover a step therebetween, and as a gap between the busbar B and the connection wiring W is filled without forming a space therebetween through the first and second thermal fusion layers 110 and 120, the distance therebetween may be firmly secured.

The connection circuit part 100 may have a plate shape on the plane formed by the first and second directions Z1 and Z2, and the positions of the internal components forming the connection circuit part 100 may be fixed to each other between the first and second thermal fusion layers 110 and 120 that are pressed to face each other in the third direction Z3. In an embodiment, the first and second thermal fusion layers 110 and 120 may form the outer surface of the connection circuit part 100, and, in further detail, an upper surface and a lower surface of the connection circuit part 100 may be formed in the third direction Z3. For example, the first and second thermal fusion layers 110 and 120 may be pressed, respectively, above the first busbar B1 and below the second busbar B2, with the heat-blocking layer 150 and the connection wiring W arranged on the heat-blocking layer 150 between the first and second busbars B1 and B2 therebetween, in the third direction Z3 to face each other, according to a certain heat and pressure. In this state, the first and second thermal fusion layers 110 and 120 may exhibit excellent step covering characteristics (step coverage), and may be in close contact with the step of the connection wiring W and the step of the busbar B protruding from the heat-blocking layer 150, by effectively covering a step due to the thickness of the connection wiring W and the thickness of the busbar B greater than the heat-blocking layer 150 in the third direction Z3. In an embodiment, the first and second thermal fusion layers 110 and 120, which form the outer surface of the connection circuit part 100, respectively forming the upper surface and the lower surface of the connection circuit part 100, may be in close contact with the step of the connection wiring W and the step of the busbar B that relatively protrude, and may expose the step of the connection wiring W and the step of the busbar B to the outside. In an embodiment, the step formed by the components forming the step on the first and second thermal fusion layers 110 and 120, that is, the busbar B, the input/output wiring IO connected to the busbar B, the connection wiring W, and the connection part C connected to the connection wiring W, may be in close contact with the outline of the steps formed on the first and second thermal fusion layers 110 and 120 to expose the steps to the outside of the first and second thermal fusion layers 110 and 120. In other words, the first and second thermal fusion layers 110 and 120 may form the outline of the steps along the steps, and, for example, the first thermal fusion layer 110 may form the outline of the steps upward, and the second thermal fusion layer 120 may form the outline of the steps downward.

The first and second thermal fusion layers 110 and 120 may form the connection circuit part 100 in the form of being integrated into one component through a laminating process in which the first and second thermal fusion layers 110 and 120 with the internal components of the connection circuit part 100 therebetween are thermally fused to each other by applying a certain heat and pressure thereto. To this end, the first and second thermal fusion layers 110 and 120 may be formed in a large area greater than the internal components of the connection circuit part 100 on the plane formed by the first and second directions Z1 and Z2, in substantially the same area to be thermally fused with respect to each other and facing each other. In an embodiment, the first and second thermal fusion layers 110 and 120 may have a width greater than the width of the heat-blocking layer 150 in the second direction Z2, and a length greater than the length of the heat-blocking layer 150 in the first direction Z1. In an embodiment, there is a relationship that, in the second direction Z2, the width of the first and second thermal fusion layers 110 and 120 is greater than the width between the first and second electrodes 11 and 12, which is greater than or equal to the width of the heat-blocking layer 150, which is greater than the width of the connection wiring W.

In various embodiments, the length of the first and second thermal fusion layers 110 and 120 may be the same as the length of the heat-blocking layer 150 or greater than the length of the heat-blocking layer 150. In an embodiment, there is a relationship that, in the first direction Z1, the length of the first and second thermal fusion layers 110 and 120 is greater than or equal to the length of the heat-blocking layer 150, which is greater than the length of the connection wiring W. In various embodiments, the first and second thermal fusion layers 110 and 120 may form an edge of the connection circuit part 100 on the plane formed by the first and second directions Z1 and Z2, and as the first and second thermal fusion layers 110 and 120 adhering to each other form the edge of the connection circuit part 100, the separation between the first and second thermal fusion layers 110 and 120 may be effectively prevented or substantially prevented.

Electrode holes 111 and 121 for exposing the first and second electrodes 11 and 12 of the battery cell 10 may be formed in the first and second thermal fusion layers 110 and 120, respectively. The connection between the first and second electrodes 11 and 12 of the battery cell 10 and the busbar B may be possible through the electrode holes 111 and 121. Further, a connection hole 113 for allowing a connection between the connection part C connected to the connection wiring W and the busbar B may be formed in the first thermal fusion layer 110. The exposure holes 112 and 122 for allowing a thermal connection between the thermistor TH of the connection wiring W and the battery cell 10 may be formed in the first and second thermal fusion layers 110 and 120, respectively.

As such, the holes 111, 121, 112, and 122 for the connection between the connection circuit part 100 and the battery cell 10 and the hole 113 for the connection between the internal components of the connection circuit part 100 may be formed in the first and second thermal fusion layers 110 and 120. In this state, the holes 111, 121, 112, and 122 for the connection between the connection circuit part 100 and the battery cell 10 corresponding to the outside of the connection circuit part 100 may be formed by penetrating the first and second thermal fusion layers 110 and 120 and the thickness of the connection circuit part 100. For example, the electrode holes 111 and 121 for the connection between the busbar B of the connection circuit part 100 and the first and second electrodes 11 and 12 of the battery cell 10, and the exposure holes 112 and 122 for the connection between the thermistor TH of the connection circuit part 100 and the battery cell 10, may be formed by penetrating the first and second thermal fusion layers 110 and 120 and the thickness of the connection circuit part 100. For example, through the electrode holes 111 and 121 formed by penetrating the thickness of the connection circuit part 100, a connection position between the busbar B and the first and second electrodes 11 and 12 of the battery cell 10 may be exposed above the connection circuit part 100, and the busbar B and the first and second electrodes 11 and 12 of the battery cell 10 may be welded to each other using a welding rod approaching the connection position of the busbar B and the first and second electrodes 11 and 12 of the battery cell 10 from above the connection circuit part 100. Further, through the exposure holes 112 and 122 formed by penetrating the thickness of the connection circuit part 100, the connection position of the thermistor TH and the battery cell 10 may be exposed above the connection circuit part 100, and the thermistor TH and the battery cell 10 may be in contact with each other through a pressing member, for example, a cover 180, approaching the connection position of the thermistor TH and the battery cell 10 from above the connection circuit part 100.

Unlike the holes 111, 121, 112, and 122 for the connection between the connection circuit part 100 and the battery cell 10, the hole 113 for the connection between the internal components of the connection circuit part 100 may not penetrate the thickness of the connection circuit part 100, and, in an embodiment, while penetrating the first thermal fusion layer 110, no hole may be formed in the second thermal fusion layer 120. For example, as the connection hole 113 for allowing the connection between the connection part C connected to the connection wiring W and the busbar B is a hole for the connection between the internal components of the connection circuit part 100, through the connection hole 113 formed in the first thermal fusion layer 110, the connection position between the connection part C and the busbar B may be exposed above the connection circuit part 100, and the connection part C and the busbar B may be welded to each other using a welding rod approaching the connection position between the connection part C and the busbar B from above the connection circuit part 100.

In an embodiment, the first and second thermal fusion layers 110 and 120, which form the entire outer surface of the connection circuit part 100, may have electrical insulation to insulate the internal components of the connection circuit part 100 from the outside. Further, the first and second thermal fusion layers 110 and 120 may have excellent step covering characteristics to form the outline of the steps formed by the internal components along the outline, thereby firmly combining the internal components of the connection circuit part 100. The first and second thermal fusion layers 110 and 120 may have excellent thermal fusion characteristics to be thermally fused in directions facing each other with the internal components of the connection circuit part 100 therebetween. In an embodiment, the first and second thermal fusion layers 110 and 120 may include a thermoplastic resin so as to be in close contact with the steps formed by the internal components of the connection circuit part 100 through elongation or deformation under the operation of a certain heat and pressure.

The connection circuit part 100 may be arranged on the arrangement of the battery cells 10, and may be fixed on the arrangement of the battery cells 10. In the following description, the position fixation of the connection circuit part 100 is described.

In an embodiment, coupling holes 115 and 125 may be formed at the corners of the connection circuit part 100. In an embodiment, the coupling holes 115 and 125 may be formed at each corner, that is, four corners, of the connection circuit part 100 that is formed in a substantially rectangular plate shape by the length extending in the first direction Z1 and the width extending in the second direction Z2. In an embodiment, the coupling holes 115 and 125 may be formed in the first and second thermal fusion layers 110 and 120 of the connection circuit part 100 at the corner positions of the first and second thermal fusion layers 110 and 120 corresponding to each other to penetrate the connection circuit part 100. In an embodiment, the coupling holes 115 and 125 may be coupled to coupling protrusions 21 formed in a pair of first and second end plates 20 arranged outside the front end and outside the rear end in the arrangement of the battery cells 10 in the first direction Z1, thereby fixing the position of the connection circuit part 100. For example, the first and second end plates 20 may include the first and second end plates 20 arranged to face each other with the arrangement of the battery cells 10 in the first direction Z1 therebetween, and a pair of the coupling protrusions 21 apart from each other in the second direction Z2 may be formed in each of the first and second end plates 20. The coupling protrusions 21 protruding from main bodies of the first and second end plates 20 in the third direction Z3 may be inserted in the coupling holes 115 and 125 formed to penetrate the connection circuit part 100.

In an embodiment, the position of the connection circuit part 100 may be fixed on the arrangement of the battery cells 10 according to an insertion coupling between the coupling holes 115 and 125 and the coupling protrusions 21, and may be in close contact with the arrangement of the battery cells 10 by a pair of side plates 30 arranged in the second direction Z2 to face each other. In an embodiment, the arrangement of the battery cells 10 may be structurally fastened by the first and second end plates 20 arranged outside the front end and the outside the rear end in the first direction Z1, and by the side plates 30 arranged to face each other with the arrangement of the battery cells 10 in the second direction Z2 therebetween. In an embodiment, the side plates 30 extending in the first direction Z1 may be coupled to the first and second end plates 20 arranged outside both end portions of the arrangement of the battery cells 10 to press the first and second end plates 20 to face each other in the second direction Z2, thereby firmly fastening the battery cells 10 arranged between the first and second end plates 20 to each other. Further, the side plates 30 extending in the first direction Z1 may cover the sides of the arrangement of the battery cells 10 in the second direction Z2, thereby protecting the arrangement of the battery cells 10.

In an embodiment, the side plates 30 may each include a pressing piece 31 formed at an upper end of the side plates 30 in the third direction Z3 and bent from main bodies of the side plates 30 in the second direction Z2. For example, the pressing piece 31 may include a pair of the pressing pieces 31 bent in the second direction Z2 to face each other at the upper ends of the side plates 30 forming a pair. The pressing pieces 31 extending in the first direction Z1 along the side plates 30 may press the connection circuit part 100 against the battery cells 10 through a pair of the pressing pieces 31 bent in the second direction Z2 to face each other, and, thus, the position of the connection circuit part 100 may be firmly fixed on the arrangement of the battery cells 10. For example, the thermistor TH may be formed on the connection wiring W forming the connection circuit part 100, and, as the connection circuit part 100 is pressed against the battery cell 10 through the pressing pieces 31 of the side plates 30, a contact between the thermistor TH and the battery cell 10 may be facilitated.

In an embodiment, the pressing pieces 31 of the side plates 30 may press both side ends of the connection circuit part 100 in the second direction Z2, for example, both side ends of each of the first and second thermal fusion layers 110 and 120 of the connection circuit part 100. In an embodiment, the first and second thermal fusion layers 110 and 120 are components for protection and insulation of the whole of the connection circuit part 100, and do not perform electrical functions other than an insulating function, thereby receiving no function damage despite the pressing by the pressing pieces 31 of the side plates 30. In an embodiment, after being arranged on the arrangement of the battery cells 10, the position of the connection circuit part 100 may be fixed on the arrangement of the battery cells 10 due to the insertion coupling between the coupling holes 115 and 125 and the coupling protrusions 21. According to the assembly of the side plates 30, the pressing pieces 31 of the side plates 30 press both side ends of the connection circuit part 100 such that the position of the connection circuit part 100 may be firmly fixed on the arrangement of the battery cells 10 and may be in close contact with the arrangement of the battery cells 10.

In an embodiment, a cover 180 may be arranged on the connection circuit part 100, and both of the connection circuit part 100 and the cover 180 may be pressed against the battery cells 10 by the pressing pieces 31 of the side plates 30, and fixed together on the battery cell 10. In an embodiment, coupling holes 185 may be formed at corners of the cover 180, and the coupling holes 185 of the cover 180 and the coupling holes 115 and 125 of the connection circuit part 100 together may be inserted in the coupling protrusions 21 of the end plates 20.

In various embodiments, the connection circuit part 100 may be adhered to the upper surface of the battery cells 10 through an adhesive layer (not shown) provided between the battery cells 10 and the connection circuit part 100. As such, as the connection circuit part 100 is adhered to the upper surface of the battery cells 10, a movement of the connection circuit part 100 may be prevented or substantially prevented. In an embodiment, the end block 50 may be arranged outside the end plates 20, for example, a pair of the end blocks 50 may be arranged outside the first and second end plates 20.

According to embodiments of the present disclosure, because a connection circuit part forming a charge/discharge path and an acquisition path of status information of a plurality of battery cells is modularized into one component having a plate shape between the battery cells and a circuit board, convenience in a manufacturing process may be enhanced, manufacturing of a light and thin battery pack may be facilitated through a compact connection circuit part, and a battery pack having low weight and low volume compared to the same output and capacity may be provided.

It is to be understood that embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as set forth in the following claims.

## Claims

1. A battery pack comprising:
at least one battery cell (10) and a connection circuit part (100) electrically connected to the at least one battery cell (10),
wherein the connection circuit part (100) comprises:
a connection wiring (W) arranged on the at least one battery cell (10) and electrically connected to the at least one battery cell (10), a heat-blocking layer (150) between the at least one battery cell (10) and the connection wiring (W), a busbar (B) arranged at at least any of a position above or below the heat-blocking layer (150) and connected to the at least one battery cell (10), and thermal fusion layers (110, 120) pressed to face each other with the connection wiring (W), the heat-blocking layer (150), and the busbar (B) therebetween.

2. The battery pack of claim 1, wherein
the at least one battery cell comprises a plurality of battery cells, and
the connection circuit part is arranged above the plurality of battery cells in a plate shape across the plurality of battery cells, forms a charge/discharge path of the plurality of battery cells by electrically connecting the plurality of battery cells to one another, and is connected to the plurality of battery cells and configured to obtain status information from the plurality of battery cells.

3. The battery pack of claim 1 or 2, wherein
the busbar forms a charge/discharge path of the plurality of battery cells by electrically connecting the plurality of battery cells to each other, and
the connection wiring is connected to the plurality of battery cells and configured to obtain status information from the plurality of battery cells.

4. The battery pack of any preceding claim, further comprising:
an input/output wiring connected to the busbar and comprising an end arranged at a position deviated from the thermal fusion layers; and
a connector connected to the connection wiring and arranged at a position deviated from the thermal fusion layers.

5. The battery pack of any preceding claim, wherein
the at least one battery cell comprises a plurality of battery cells, and
the busbar connects in parallel battery cells of the plurality of battery cells belonging to a same parallel module to each other, and connects in series battery cells of the plurality of battery cells belonging to different parallel modules to each other;
and/or wherein the parallel modules each comprise a pair of battery cells neighboring each other in a first direction in which the battery cells are arranged.

6. The battery pack of any preceding claim, wherein the busbar comprises:
a connection part connecting different parallel modules to each other; and
first and second branch parts protruding from end positions of the connection part and connected to each parallel module to be connected;
and/or wherein:
the connection part extends in a first direction in which the battery cells are arranged, and
the first and second branch parts protrude from the end positions of the connection part in a second direction in which first and second electrodes of each of the battery cells are arranged;
and/or wherein:
the connection part is arranged toward a central position of the battery cells in a second direction, and
the first and second branch parts are arranged toward edges where first and second electrodes of the battery cells are arranged in the second direction.

7. The battery pack of any preceding claim, wherein the busbar comprises:
a first busbar arranged above the heat-blocking layer; and
a second busbar arranged below the heat-blocking layer.

8. The battery pack of claim 1, wherein the heat-blocking layer is arranged between the connection wiring and a vent part of the at least one battery cell;
and/or wherein:
the at least one battery cell comprises first and second electrodes arranged in a second direction, and
the connection wiring extends in the second direction along a central position where the vent part is arranged.

9. The battery pack of any preceding claim, wherein
the at least one battery cell comprises first and second electrodes arranged in a second direction, and
a width of the connection wiring in the second direction is less than a width of the heat-blocking layer.

10. The battery pack of any preceding claim, wherein
the at least one battery cell comprises first and second electrodes arranged in a second direction, and
a width of the connection wiring in the second direction is less than a width between busbars arranged in the second direction.

11. The battery pack of any preceding claim, wherein a length of the connection wiring in a first direction in which battery cells of the at least one battery cell are arranged is less than a length of the heat-blocking layer.

12. The battery pack of any preceding claim, wherein the connection wiring extends from a front end toward a rear end in an arrangement of the battery cells in the first direction, to a position not overlapping a cross busbar arranged at the rear end of the arrangement of the battery cells.

13. The battery pack of any preceding claim, further comprising:
a pair of end plates arranged to face each other outside a front end and a rear end in an arrangement of battery cells of the at least one battery cell in a first direction; and
a pair of side plates arranged to face each other in a second direction crossing the first direction with the arrangement of the battery cells therebetween between the pair of end plates.

14. The battery pack of claim 13, wherein a pressing piece configured to press the connection circuit part toward the arrangement of the battery cells is arranged on the pair of side plates.

15. The battery pack of claim 13 or 14, wherein coupling holes of the connection circuit part and coupling protrusions of the end plates form an insertion coupling therebetween;
and/or wherein:
the connection circuit part has a length in the first direction and a width in the second direction crossing the first direction, and
the coupling holes are respectively located at each corner of the connection circuit part.
